# EUROPEAN PATENT SPECIFICATION

(11) **EP 2 998 574 B1**
(45) Date of publication and mention of the grant of the patent: **07.06.2017**
(21) Application number: 15185001.3
(22) Date of filing: 14.09.2015
(51) Int. Cl.: F03D 15/10

(54) **TRANSMISSION DEVICE, PARTICULARLY FOR WIND TURBINE BLADES**
ÜBERTRAGUNGSVORRICHTUNG, INSBESONDERE FÜR WINDTURBINENSCHAUFELN
DISPOSITIF DE TRANSMISSION, EN PARTICULIER POUR PALES D'ÉOLIENNE

(30) Priority: 16.09.2014 IT MO20140260
(43) Date of publication of application: 23.03.2016
(73) Proprietor: Giacani, Bruno, 41122 Modena (IT)
(72) Inventor: Giacani, Bruno, 41122 Modena (IT)
(74) Representative: Modiano, Micaela Nadia

(56) References cited:
- WO-A1-2011/039404
- WO-A1-2014/081219
- WO-A2-2009/105848
- DE-U1-202012 000 907
- FR-A- 566 919
- US-A1- 2008 095 608

## Description

The present invention relates to a transmission device of wind turbine blades.

Systems for generating electricity from renewable natural sources are increasingly widespread.

In particular wind generators are known which make it possible to convert wind energy to electricity by way of windmills which are provided with rotating elements that are put in motion by the thrust of the wind and are coupled to an electricity generator.

Several types of wind generators are known and, in particular, vertical-axis wind generators are known in which the blades, which are usually curved in shape, rotate about a vertical axis.

In conventional generators the blades are usually arranged at a fixed angle with respect to the central rotation axis and they have, therefore, a high resistance to rotating against the wind, such that the overall efficiency of the generator is decreased and operation of the blades is prevented in the event of low winds.

In order to reduce, if not prevent, this drawback, several solutions have been proposed which relate to changes in the shape structure of the blades or to the insertion of gearwheels and linkages for orienting the blades.

In particular Italian patent application no. MO2013A000031, by the same applicant, discloses a transmission element for wind turbine blades which allows them to be turned independently of the strength of the wind, in that it guides the blade in rotation so as to modify its angle and exploit its energy even when rotating against the wind.

However this solution, although valid for the purpose, can be further improved by reducing its encumbrances and the number of component parts.

FR 566 919 A discloses a turbo-aircraft apparatus for sensing the force exerted on the air currents moving blades to transmit this force through an appropriate system to a body likely to ensure continuity and employment to production movement. The air-turbo device for detecting the strength of the air currents can be a fixed or mobile base following according to requirements, and it transmits the force captured through an appropriate system to any kind of organ.

WO 2009/105848 A2 discloses a device for the transformation of wind energy, comprising a bearing base of a vertical rotor with symmetrically and equally set radial arms. At each of the arms' endings there is situated vertical spindle, finishing in its upper end with vertical panel. In the central part of the rotor, on bearing base there is a directing spindle, ending with a wind pointer. Each spindle is connected with a directing spindle by a relative mechanical gear. In rotation of the rotor mechanical gear registers rotations of panels with transferring ratio against the directing spindle at 1:2 and 1:1, with permanent and deviating rotation speed at permanent rotation speed of the rotor. The mechanical gear also transfers partial rotations of the panels around their initial positions. This secures different planetary motions of the panels depending on the speed and character of the wind.

The aim of the present invention is to eliminate the above mentioned drawbacks in the background art by providing a transmission device, particularly for wind turbine blades, which makes it possible to optimize the efficiency of the wind power generator in which it is installed, thus ensuring the continuous rotation of the blades even in the presence of low winds, but with contained encumbrances and a reduced number of component parts.

Within this aim, another object of the present invention is to not require frequent maintenance operations.

Another object of the present invention is to be versatile and capable of being employed in different configurations of use, including in the spaces available for the specific installation. Furthermore, there can be several installations of individual or combined devices in complex structures that respect the environment.

Another object of the present invention is to offer a simple shape structure that is easy and practical to implement, safe in use and effective in operation, and which is also low cost.

In accordance with the invention, there is provided a transmission device of wind turbine blades, as defined in the appended claims.

Further characteristics and advantages of the present invention will become better apparent from the detailed description of some preferred, but not exclusive, embodiments of a transmission device, particularly for wind turbine blades, which are illustrated for the purposes of non-limiting examples in the accompanying drawings wherein:

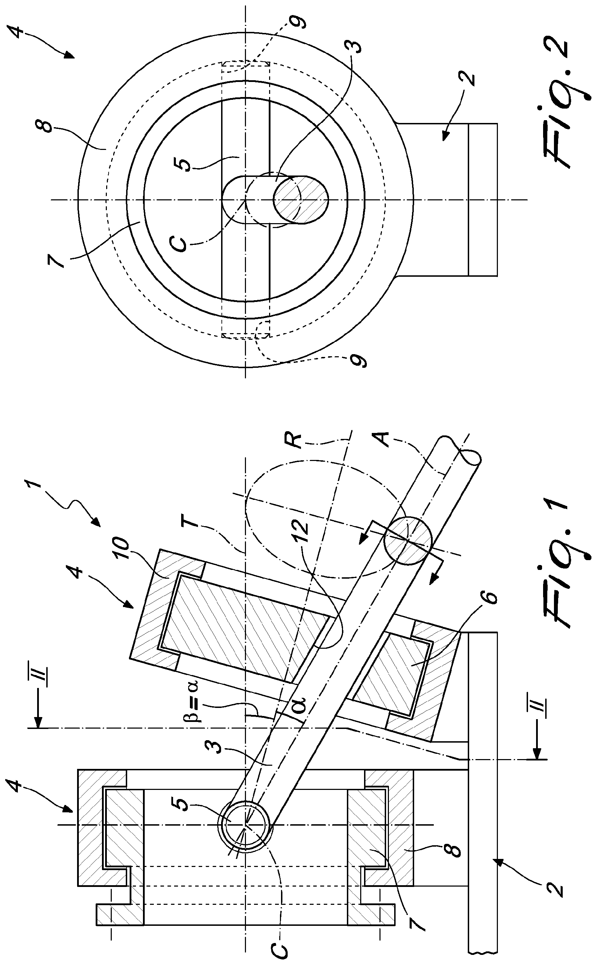

Figure 1 is a schematic cross-sectional view taken along a longitudinal plane of a first embodiment of a transmission device, particularly for wind turbine blades, according to the invention in a first angular position;
Figure 2 is a schematic cross-sectional view taken along the line II-II in Figure 1;

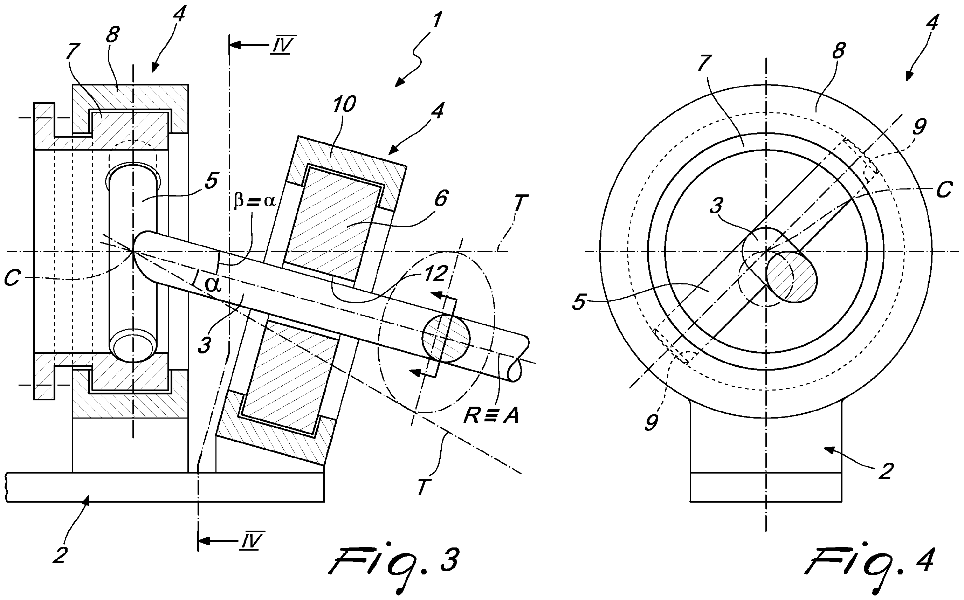

Figure 3 is a schematic cross-sectional view taken along a longitudinal plane of the transmission device in Figure 1 in a second angular position, with phase displaced by 45° with respect to the first;
Figure 4 is a schematic cross-sectional view taken along the line IV-IV in Figure 3;

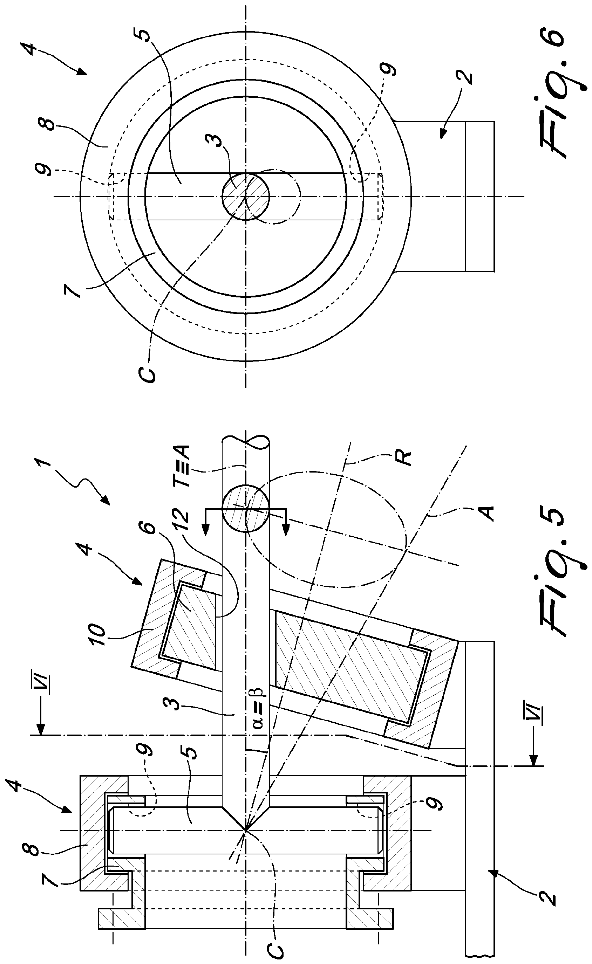

Figure 5 is a schematic cross-sectional view taken along a longitudinal plane of the transmission device in Figure 1 in a third angular position, with phase displaced by 90° with respect to the first;
Figure 6 is a schematic cross-sectional view taken along the line VI-VI in Figure 5;

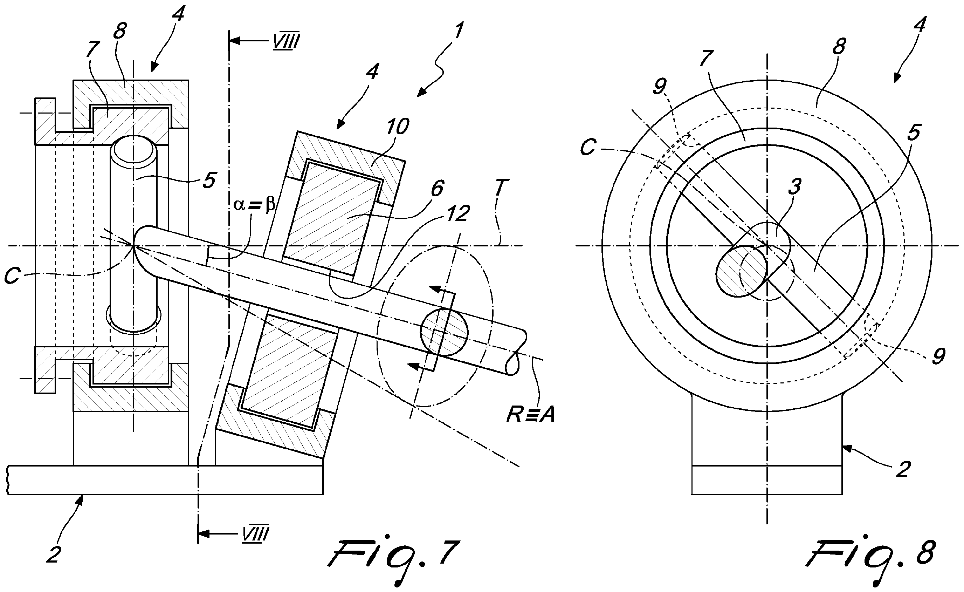

Figure 7 is a schematic cross-sectional view taken along a longitudinal plane of the transmission device in Figure 1 in a fourth angular position, with phase displaced by 135° with respect to the first;
Figure 8 is a schematic cross-sectional view taken along the line VIII-VIII in Figure 7;
Figure 9 is a schematic cross-sectional view taken along a longitudinal plane, of a second embodiment of the transmission device according to the invention;
Figure 10 is a schematic partially cross-sectional view taken along a longitudinal plane, of a third embodiment of the transmission device according to the invention;
Figure 11 is a schematic partially cross-sectional view taken along a longitudinal plane, of a fourth embodiment of the transmission device according to the invention;
Figures 12 and 13 are schematic partially cross-sectional views of respective installations which comprise two transmission devices according to the invention.

With reference to the figures, the reference numeral 1 generally designates a transmission device, particularly for wind turbine blades.

The assembly 1 comprises a frame 2 for supporting a main shaft 3 for the movement of at least one wind turbine blade 14 and means for the rotational support 4 of the main shaft simultaneously about its own main longitudinal axis A and about an axis of revolution R, which are mutually incident and are inclined at a first angle α so as to trace a right cone the apex of which lies at the intersection point C of the aforementioned axes and an aperture at the apex equal to twice the amplitude of the first angle α.

According to the invention the rotational support means 4 comprise a pivot 5 associated with the main shaft 3 and transverse thereto, which is supported by the frame 2 in rotation about a rotation axis T. Such rotation axis T is perpendicular to the longitudinal extension of the pivot 5 and is inclined by a second angle β, equal to the first angle α, with respect to the axis of revolution R and also passes through the intersection point C of the axes A and R.

In this manner the rotation axis T is tangent to the right conical trajectory traced by the main shaft 3.

The rotational support means 4 also have at least one disk 6, which is provided with a through seat 12 in which the main shaft 3 is inserted, and which is supported by the frame 2 in rotation about the axis of revolution R, i.e. about a second rotation axis Z parallel to the previous axis.

The rotation of the disk 6 entrains the main shaft 3 in motion according to the aforementioned right conical trajectory.

In more detail, the first rotational support means 4 comprise a ring 7 which lies on a plane that is perpendicular to the rotation axis T and is supported rotationally about it by a bushing 8 associated with the frame 2. The pivot 5 has its mutually opposite ends inserted in respective seats 9 which are defined in or associated with the ring 7.

In a possible embodiment the pivot 5 is integral with the main shaft 3 and the ends of the pivot are inserted with play in the respective seats 9, so as to be able to oscillate with respect to the ring 7 in order to follow the movement of the main shaft 3. Alternatively, the main shaft 3 can be associated with the pivot 5 so as to be freely able to rotate about the longitudinal axis of the pivot and the ends of the pivot 5 can be forced into the respective seats 9, the pivot 5 being integral with the ring 7. The ring 7 has a speed of rotation about the rotation axis T equal to the rotation speed of the main shaft 3 about its own longitudinal axis A.

Furthermore, the rotational support means 4 are provided with at least one collar 10 which is associated with the frame 2 and supports a corresponding disk 6 in rotation about the axis of revolution R or about the second rotation axis Z.

The assembly 1 is provided with at least one wind turbine blade 14 which is associated with the main shaft 3 or with the ring 7.

Preferably the shape structure of the blade 4 is substantially flat and symmetrical with respect to its own rotation axis.

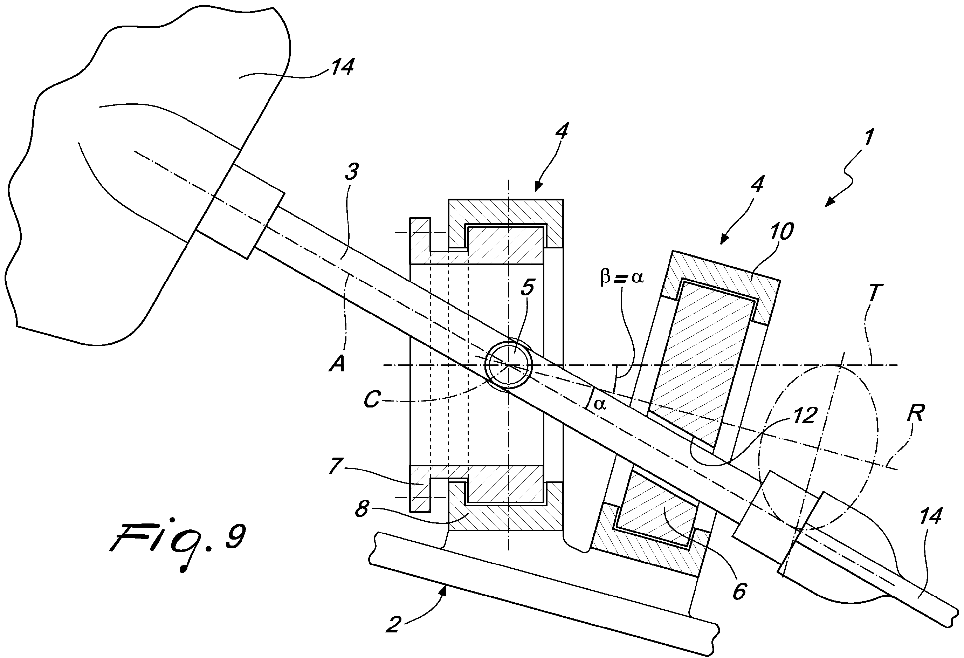

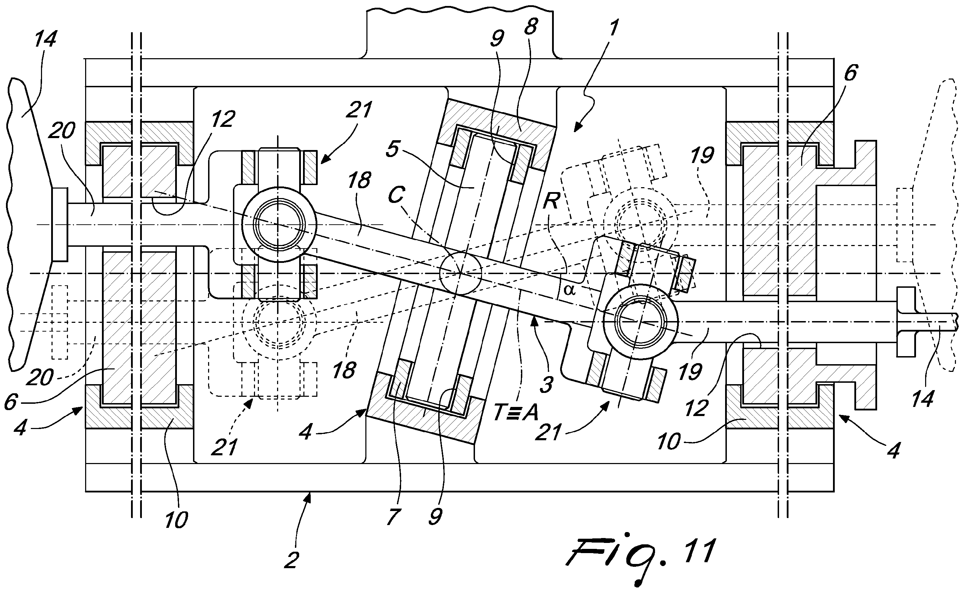

Preferably the main shaft 3 has at least one end associated with a wind turbine blade 14. The main shaft 3 can extend beyond the pivot 5 and have both ends associated with respective wind turbine blades 14 (Figures 9 and 11) which are arranged angularly out of phase by 90° in order to ensure the device 1 begins rotating in the presence of wind, and uniformity of rotation with both blades 14.

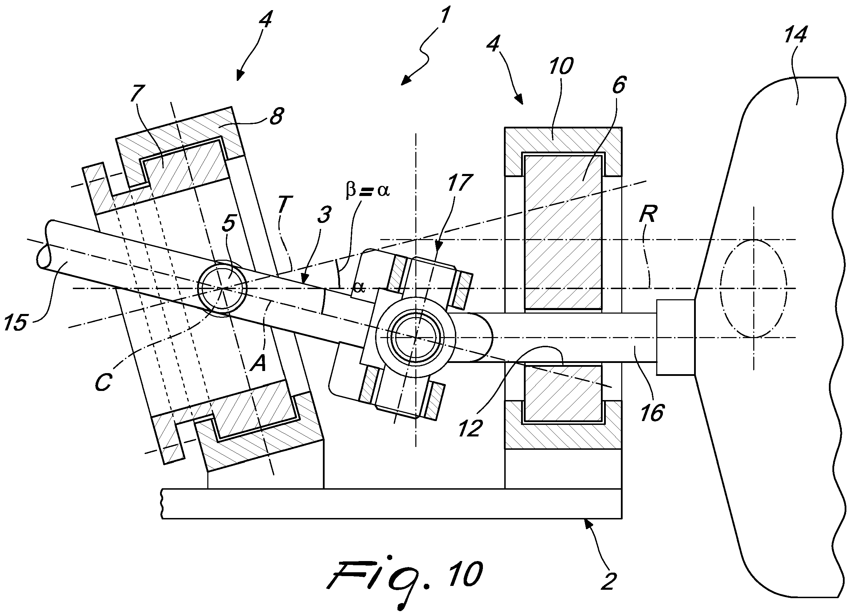

Furthermore, in a variation, shown in Figure 10, the main shaft 3 comprises two portions 15 and 16 between which a universal joint 17 is interposed, and of which the first portion 15 is associated with the pivot 5 and extends along the main longitudinal axis A and the second portion 16 is inserted through the seat 12 in the disk 6 and is kept parallel to the rotation axis R.

The longitudinal axis of the second portion 16 traces a cylindrical trajectory centered on the axis of revolution R.

In a further embodiment (Figure 11) the main shaft is divided into three consecutive portions, of which the central portion 18 extends along the main longitudinal axis A and is passed through by the pivot 5, and the lateral portions 19, 20 are inserted in respective disks 6 so as to pass through them, through the corresponding seats 12, said disks being supported rotationally by corresponding collars 10.

Interposed between the central portion 18 and the lateral portions 19, 20 is a respective universal joint 21 and at the end of each lateral portion 19, 20 there is a respective wind turbine blade 14.

The longitudinal axes of the lateral portions 19, 20 trace respective cylindrical trajectories centered on the axis of revolution R.

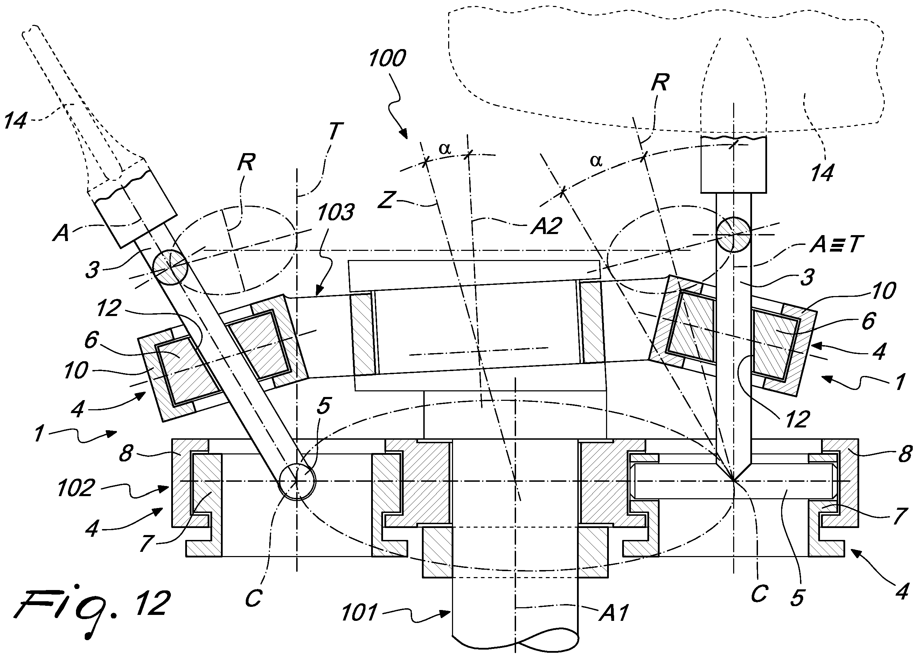

Furthermore, Figure 12 shows an installation 100 which has two transmission devices 1 of the type described above, which are supported by a pole 101. Each one of the devices 1 has a corresponding wind turbine blade 14 associated with the upper end of the corresponding main shaft 3, the two blades 14 being mutually out of phase by 90°. The bushings 8 of the two devices 1 are integral with each other and made in a single piece 102 which is supported by a pole 101 in rotation about a first axis A1.

The collars 10 are also integral with each other and made in a further single piece 103 which is supported in rotation by the pole 101 about a second axis A2 which is eccentric with respect to the first axis A1. The eccentricity between the axes A1 and A2 defines the inclination of the axis of revolution R and of the axis Z parallel thereto.

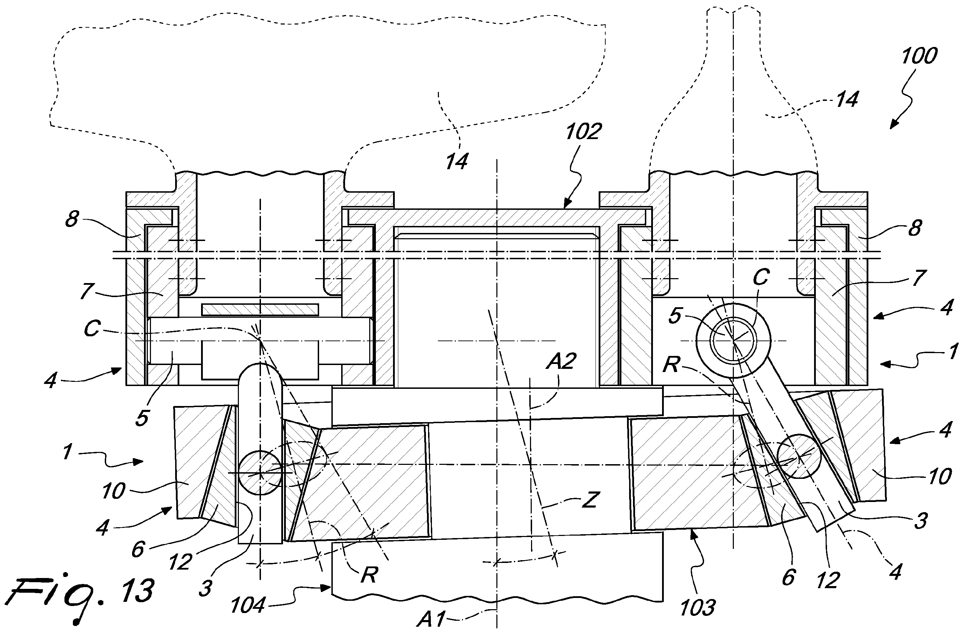

Figure 13 shows a variation of the installation 100 in which the rings 7 are arranged above the bushings and each ring entrains a corresponding wind turbine blade 14 in rotation, the two blades 14 being mutually out of phase by 90°.

It should be noted that in the installations 100 in Figures 12 and 13 the wind turbine blades 14 are in diametrically opposite positions with respect to the pole 101 and the intersection points C of the devices trace a circular trajectory about the axis A1 on which the right conic trajectories of the main shafts 3 are traced.

Obviously the devices 1 must be coupled to conventional assemblies for converting mechanical energy to electricity, not shown, and they can be fitted with systems for adjusting the wind turbine blades 14.

In practice it has been found that the invention as described achieves the intended aim and objects and, in particular, attention is drawn to the fact that the transmission device according to the invention is simple in structure and has contained encumbrances, but is also efficient and functional.

The invention thus conceived is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements without for this reason departing from the scope of protection claimed herein.

The disclosures in Italian Patent Application No. MO2014A000260 (102014902293422) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A transmission device (1) of wind turbine blades, which comprises a frame (2) for supporting a main shaft (3) for the movement of at least one wind turbine blade (14) **characterised by** means for the rotational support (4) of said main shaft (3) simultaneously about its own main longitudinal axis (A) and about an axis of revolution (R), which are mutually incident and are inclined at a first angle (α) so as to trace a right cone the apex of which lies at the intersection point (C) of said axes (A, R), whereby said rotational support means (4) comprise a pivot (5) which is associated with said main shaft (3) and is arranged transversely thereto, and is supported by said frame (2) in rotation about a rotation axis (T) which is perpendicular thereto and tangent to said right conical trajectory, and at least one disk (6) which is provided with a seat (12) in which said main shaft (3) is inserted so as to pass through, and which is supported rotationally by said frame (2) about said axis of revolution (R) or about a second rotation axis (Z) which is parallel thereto.

2. The transmission device (1) of wind turbine blades according to claim 1, **characterized in that** said rotational support means (4) comprise a ring (7) which is supported rotationally about said rotation axis (T) by a bushing (8) associated with said frame (2), the ends of the pivot (5) being inserted in corresponding seats (9) which are defined in the ring (7).

3. The transmission device (1) of wind turbine blades according to claim 1, **characterized in that** said rotational support means (4) comprise at least one collar (10) associated with said frame (2) which supports rotationally said at least one disk (6).

4. The transmission device (1) of wind turbine blades according to one or more of the preceding claims, **characterized in that** it comprises at least one wind turbine blade (14) associated with one of the ends of said main shaft (3) or with said ring (7).

5. The transmission device (1) of wind turbine blades according to claim 4, **characterized in that** said at least one wind turbine blade (14) is substantially flat and symmetrical with respect to its own rotation axis.

6. The transmission device (1) of wind turbine blades according to one or more of the preceding claims, **characterized in that** said main shaft (3) comprises at least two portions (15, 16), of which a first portion (15) is associated with said pivot (5) and is arranged along said longitudinal axis (A) and a second portion (16) is engaged in said disk (6), and between which a universal joint (17) is interposed.

7. The transmission device (1) of wind turbine blades according to claim 6, **characterized in that** it comprises three of said portions, of which a central portion (18) is associated with said pivot (5) and is arranged along said longitudinal axis (A) and two lateral portions (19, 20) are inserted in corresponding disks (6) and are associated with corresponding wind turbine blades (14), a corresponding universal joint (21) being interposed between the central portion (19) and each one of the lateral portions (19, 20).

8. An installation (100) for moving wind turbine blades (14), **characterized in that** it comprises at least two devices (1) according to one or more of the preceding claims associated with a supporting pole (101) and provided with the corresponding bushings (8) integral in rotation with respect to said pole (101) about a first axis (A1) and the corresponding collars (10) integral in rotation with respect to said pole about a second axis (A2) which is parallel to and spaced apart from said first axis (A1).

## Patentansprüche

1. Eine Übertragungsvorrichtung (1) für Windradschaufeln, die einen Rahmen (2) zum Tragen einer Hauptantriebswelle (3) für die Bewegung mindestens einer Windradschaufel (14) umfasst, **gekennzeichnet durch**
Mittel zur Rotationslagerung (4) der Hauptantriebswelle (3) gleichzeitig um ihre eigene Haupt-Längsachse (A) und um eine Rotationsachse (R), die zusammentreffen und um einen ersten Winkel (α) geneigt sind, um einen rechten Kegel zu bilden, dessen Scheitelpunkt am Schnittpunkt (C) der Achsen (A, R) liegt, wodurch die Rotationslagerungsmittel (4) einen Drehzapfen (5) umfassen, der mit der Hauptantriebswelle (3) verbunden und quer dazu angeordnet ist und von dem Rahmen (2) in Rotation um eine Drehachse (T) gelagert ist, welche senkrecht dazu und tangential zu der rechten konischen Trajektorie ist, und mindestens eine Scheibe (6), die mit einem Sitz (12) ausgestattet ist, in welchen die Hauptantriebswelle (3) durchgehend eingesetzt ist und der drehbar von dem Rahmen (2) um die Drehachse (R) oder um eine zweite Drehachse (Z) gelagert ist, die parallel dazu ist.

2. Die Übertragungsvorrichtung (1) für Windradschaufeln gemäß Anspruch 1, **dadurch gekennzeichnet, dass** die Rotationslagerungsmittel (4) einen Ring (7) umfassen, der drehbar um die Drehachse (T) von einer Buchse (8) getragen wird, die mit dem Rahmen (2) verbunden ist, wobei die Enden des Drehzapfens (5) in entsprechende Sitze (9) eingeführt sind, die im Ring (7) bestimmt sind.

3. Die Übertragungsvorrichtung (1) für Windradschaufeln gemäß Anspruch 1, **dadurch gekennzeichnet, dass** die Rotationslagerungsmittel (4) mindestens einen Bund (10) umfassen, der mit dem Rahmen (2) verbunden ist, welcher die mindestens eine Scheibe (6) drehbar trägt.

4. Die Übertragungsvorrichtung (1) für Windradschaufeln gemäß einem oder mehreren der obigen Ansprüche, **dadurch gekennzeichnet, dass** sie mindestens eine Windradschaufel (14) umfasst, die mit einem der Enden der Hauptantriebswelle (3) oder mit dem Ring (7) verbunden ist.

5. Die Übertragungsvorrichtung (1) für Windradschaufeln gemäß Anspruch 4, **dadurch gekennzeichnet, dass** die mindestens eine Windradschaufel (14) im Wesentlichen flach und symmetrisch mit Bezug auf ihre eigene Drehachse ist.

6. Die Übertragungsvorrichtung (1) für Windradschaufeln gemäß einem oder mehreren der obigen Ansprüche, **dadurch gekennzeichnet, dass** die Hauptantriebswelle (3) mindestens zwei Abschnitte (15, 16) umfasst, wobei ein erster Abschnitt (15) davon mit dem Drehzapfen (5) verbunden und entlang der Längsachse (A) angeordnet ist und ein zweiter Abschnitt (16) in die Scheibe (6) eingreift und zwischen den beiden Abschnitten ein Universalgelenk (17) angeordnet ist.

7. Die Übertragungsvorrichtung (1) für Windradschaufeln gemäß Anspruch 6, **dadurch gekennzeichnet, dass** sie drei der Abschnitte umfasst, wobei ein zentraler Abschnitt (18) davon mit dem Drehzapfen (5) verbunden und entlang der Längsachse (A) angeordnet ist und zwei seitliche Abschnitte (19, 20) in entsprechende Scheiben (6) eingeführt und mit entsprechenden Windradschaufeln (14) verbunden sind, wobei ein entsprechendes Universalgelenk (21) zwischen dem zentralen Abschnitt (19) und jedem der seitlichen Abschnitte (19, 20) angeordnet ist.

8. Eine Installation (100) zum Bewegen von Windradschaufeln (14), **dadurch gekennzeichnet, dass** sie mindestens zwei Vorrichtungen (1) gemäß einem oder mehreren der obigen Ansprüche umfasst, verbunden mit einer Stützsäule (101) und ausgestattet mit den entsprechenden Buchsen (8), integral in der Rotation mit Bezug auf die Säule (101) um eine erste Achse (A1), und den entsprechenden Bünden (10), integral in der Rotation mit Bezug auf die Säule um eine zweite Achse (A2), die parallel zu der ersten Achse (A1) und von ihr beabstandet ist.

## Revendications

1. Dispositif de transmission (1) de pales d'éolienne, qui comprend un bâti (2) pour supporter un arbre principal (3) pour le mouvement d'au moins une pale (14) d'éolienne, **caractérisé par** des moyens de support de rotation (4) dudit arbre principal (3) simultanément autour de son propre axe longitudinal principal (A) et autour d'un axe de révolution (R), qui sont mutuellement incidents et sont inclinés à un premier angle (α) afin de tracer un cône droit, dont le sommet se trouve au point d'intersection (C) desdits axes (A, R), moyennant quoi lesdits moyens de support de rotation (4) comprennent un pivot (5) qui est associé audit arbre principal (3) et est agencé de manière transversale par rapport à ce dernier, et est supporté par ledit bâti (2) en rotation autour d'un axe de rotation (T) qui est perpendiculaire à ce dernier et tangent par rapport à ladite trajectoire conique droite, et au moins un disque (6) qui est prévu avec un siège (12) dans lequel ledit arbre principal (3) est inséré afin de le traverser, et qui est supporté en rotation par ledit bâti (2) autour dudit axe de révolution (R) ou autour d'un second axe de rotation (Z) qui est parallèle à ce dernier.

2. Dispositif de transmission (1) de pales d'éolienne selon la revendication 1, **caractérisé en ce que** lesdits moyens de support de rotation (4) comprennent un anneau (7) qui est supporté en rotation autour dudit axe de rotation (T) par une bague (8) associée audit bâti (2), les extrémités du pivot (5) étant insérées dans des sièges (9) correspondants qui sont définis dans l'anneau (7).

3. Dispositif de transmission (1) de pales d'éolienne selon la revendication 1, **caractérisé en ce que** lesdits moyen de support de rotation (4) comprennent au moins un collier (10) associé audit bâti (2) qui supporte, en rotation, ledit au moins un disque (6).

4. Dispositif de transmission (1) de pales d'éolienne selon une ou plusieurs des revendications précédentes, **caractérisé en ce qu'**il comprend au moins une pale (14) d'éolienne associée à l'une des extrémités dudit arbre principal (3) ou audit anneau (7).

5. Dispositif de transmission (1) de pales d'éolienne selon la revendication 4, **caractérisé en ce que** ladite au moins une pale (14) d'éolienne est sensiblement plate et symétrique par rapport à son propre axe de rotation.

6. Dispositif de transmission (1) de pales d'éolienne selon une ou plusieurs des revendications précédentes, **caractérisé en ce que** ledit arbre principal (3) comprend au moins deux parties (15, 16), dont une première partie (15) est associée audit pivot (5) et est agencée le long dudit axe longitudinal (A) et une seconde partie (16) est mise en prise dans ledit disque (6) et entre lesquelles un joint universel (17) est intercalé.

7. Dispositif de transmission (1) de pales d'éolienne selon la revendication 6, **caractérisé en ce qu'**il comprend trois desdites parties, dont une partie centrale (18) est associée audit pivot (5) et est agencée le long dudit axe longitudinal (A) et deux parties latérales (19, 20) sont insérées dans des disques (6) correspondants et sont associées avec des pales (14) d'éolienne correspondantes, un joint universel (21) correspondant étant intercalé entre la partie centrale (19) et chacune des parties latérales (19, 20).

8. Installation (100) pour déplacer des pales (14) d'éolienne, **caractérisée en ce qu'**elle comprend au moins deux dispositifs (1) selon une ou plusieurs des revendications précédentes, associés à un pieu de support (101) et prévus avec des bagues (8) correspondantes solidaires en rotation par rapport audit pieu (101) autour d'un premier axe (A1) et les colliers (10) correspondants solidaires en rotation par rapport audit pieu autour d'un second axe (A2) qui est parallèle et espacé dudit premier axe (A1).
